# EUROPEAN PATENT APPLICATION

(11) **EP 4 250 219 A1**
(43) Date of publication of application: **27.09.2023**
(21) Application number: 23161170.8
(22) Date of filing: 10.03.2023
(51) Int. Cl.: G06Q 30/0601

(54) **BUNDLE CREATION FROM DESCRIPTION CONTENT USING MACHINE LEARNING**

(30) Priority: 21.03.2022 US 202217699400
(71) Applicant: eBay, Inc., San Jose, CA 95125 (US)
(72) Inventor: MOHAN, Kishore Kumar, San Jose, 95125 (US); PERIYATHAMB, Ramesh, San Jose, 95125 (US); DURAIVENKATESH, Lakshimi, San Jose, 95125 (US)
(74) Representative: Müller-Boré & Partner Patentanwälte PartG mbB

(57) **Abstract**

A bundle generation engine provides recommendations for an item and at least one compatible item. Upon receiving an item listing for an item at a listing platform, the bundle generation engine determines that unstructured text of an item description for the item listing includes one or more compatible items. For example, the bundle generation engine may use a classification model to determine the unstructured text includes the one or more compatible items. Based on determining that the unstructured text includes the one or more compatible items, the bundle generation engine identifies one or more identifiers within the unstructured text of the item description. For example, the identifiers may be model identifiers or brand identifiers. In aspects, the identifiers are identified using one or more natural language processing models. A bundle recommendation is provided to a user device based on the one or more identifiers.

## Description

### BACKGROUND

Many search systems provide results to users upon submissions of search queries. For instance, a user may input a search term at a search engine and receive results associated with the search term. In the context of an electronic catalog, when a user accesses a network resource (e.g., a webpage) that is associated with an item, the resource may be supplemented with a list of related items. These related items, however, may not be a one hundred percent match (e.g., not mechanically or electronically operational) with the item. For example, the item may include a television and the list of related items may include television stands and entertainment centers, some of which match with respect to the size of the television but not the weight or color of the television. As another example, the item may include a couch and the list of related items may include coffee tables that do not match the style of the couch. Further, the methods in which these related items are identified involve wasteful usage of excessive computing resources. As such, upon submission of a search query, existing search systems fail to provide search results that include additional items that would further satisfy the intent of the user.

### SUMMARY

At a high level, aspects described herein relate to providing a bundle recommendation for purchase based on determining unstructured text, of an item description for an item listing, includes compatible items and identifying identifiers for the compatible items within the unstructured text. Providing the bundle recommendation in this way eliminates or reduces the need for additional and subsequent user queries. Additionally, the bundle recommendation provides additional and relevant purchasing options associated with the item being searched to the user, thereby informing the user of these options that the user otherwise would not have been aware of. By providing one or more bundles for purchase, the search engine enables the return of search results that matches or enhances an intent of a user.

In accordance with aspects of the technology described herein, an item listing for an item is received at a listing platform. As an example, an item listing may include an item description relating to the item and may comprise one or more or a combination of the following: a price in a currency, reviews, shipment options, a rating, a condition of the item, a size of the item, a color of the item, etc. The item description may also comprise one or more identifiers for compatible items within unstructured text of the item description. For example, if the item is a refrigerator, the compatible items may include water filters that are compatible with the refrigerator. Continuing the example, the identifiers for the compatible water filters may include model and brand identifiers.

In aspects, a bundle generation engine determines that the unstructured text of the item description includes one or more compatible items using a classification model. Further, the bundle generation engine identifies the identifiers for the compatible items using a natural language processing model (e.g., an entity recognition natural processing model). In addition, the bundle generation engine selects a first compatible item of the compatible items identified based on an identifier previously identified. Based on selections by the bundle generation engine, one or more bundle recommendations are provided to a user device (e.g., via a graphical user interface). The bundle recommendations may include the item listing for the item and the first compatible item listing for the first compatible item.

The Summary is intended to introduce a selection of concepts in a simplified form that is further described in the Detailed Description of this disclosure. The Summary is not intended to identify key or essential features of the claimed subject matter, nor is it intended to be used as an aid in determining the scope of the claimed subject matter. Additional objects, advantages, and novel features of the technology will be provided, and in part will become apparent to those skilled in the art upon examination of the disclosure or learned through practice of the technology.

### BRIEF DESCRIPTION OF THE DRAWINGs

The present technology is described in detail below with reference to the attached drawing figures, wherein:
FIG. 1 is a block diagram of an example operating environment suitable for implementing aspects of the technology described herein;
FIG. 2 is an example flow diagram suitable for implementing aspects of the present technology, according to an aspect described herein;
FIG. 3 is an example item description of an item listing comprising one or more identifiers for compatible items, according to an aspect of the technology described herein;
FIG. 4 is a flow diagram showing a method for providing a bundle recommendation, in accordance with an aspect of the technology described herein; and
FIG. 5 is an example computing device suitable for implementing the described technology, in accordance with an aspect described herein.

### DETAILED DESCRIPTION

The subject matter of aspects of the technology is described with specificity herein to meet statutory requirements. However, the description itself is not intended to limit the scope of this patent. Rather, the inventors have contemplated that the claimed subject matter might also be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described.

In addition, words such as "a" and "an," unless otherwise indicated to the contrary, may also include the plural as well as the singular. Thus, for example, the constraint of "a feature" is satisfied where one or more features are present. Furthermore, the term "or" includes the conjunctive, the disjunctive, and both (*a* or *b* thus includes either *a* or *b,* as well as *a* and *b*).

While search engines are an incredibly useful tool for providing search results for received search queries, shortcomings in existing search technologies often result in the consumption of an unnecessary quantity of computing resources (e.g., I/O costs, network packet generation costs, throughput, memory consumption, etc.). When performing searches, users are often seeking particular search results and are often either unaware of compatible items that are available for the particular item being searched or are aware of the compatible items but have to search for them using a separate search query, resulting in the consumption of unnecessary computing resources. In addition, existing search technologies that provide related items to users often comingle search results associated with an item being searched or the related items identified. Additionally, the existing search technologies provide search results that are too vast and broad, which then requires the user to submit additional search queries or multiple filters to obtain the desired search results pertaining to the item and any related item.

For example, an existing search engine may receive a query for "men's pants" and subsequently provide a set of search results comprising pants with various sizes, colors, patterns, styles, and brands. Continuing the example, the existing search engine may provide shirts that are related to the men's pants by identifying a similar color within an image of the selected pants and an image of the available shirts. In some cases, the user often has to browse multiple pages of the search results of the pants prior to finally selecting the pants the user desires, and additionally the user often has to apply multiple filters to access a desired shirt that the user finds suitable. In some cases, the user will have to conduct a separate search altogether to find the shirt that the user desires. For example, the process of searching for related items using features within images often results in identifying related items that are not a suitable match that the user finds desirable, since style based on various color schemes can be subjective to the user. Because these matches are not matches reflecting the goal of the user, the subsequent process of additional browsing and filter selection unnecessarily consumes various computing resources of the search system, such as processing power, network bandwidth, throughput, memory consumption, etc.

These shortcomings of existing search technologies adversely affect computer network communications. For example, each time a query is received, contents or payload of the search queries is typically supplemented with header information or other metadata, which is multiplied by all the additional queries needed to obtain the particular item and related item the user desires. As such, there are throughput and latency costs by repetitively generating this metadata and sending it over a computer network. In some instances, these repetitive inputs (e.g., repetitive clicks, selections, or queries) increase storage device I/O (e.g., excess physical read/write head movements on non-volatile disk) because each time a user inputs unnecessary information, such as inputting several queries, the computing system often has to reach out to the storage device to perform a read or write operation, which is time consuming, error prone, and can eventually wear on components, such as a read/write head.

Further, if multiple users repetitively issue queries, it is expensive because processing queries consumes a lot of computing resources. For example, for some search engines, a query execution plan may need to be calculated each time a query is issued, which requires a search system to find the least expensive query execution plan to fully execute the query. This decreases throughput and increases network latency, and can waste valuable time. Users who make multiple selections corresponding to related items after initially submitting a query would be better serviced by a search engine that initially provides search results including items and related items that have the various aspects or attributes in which the user desires.

Aspects of the technology described herein provide for improvements in identifying related items that more closely match the particular item being searched. Aspects of the technology described herein improve the functioning of the computer itself in light of these shortcomings in existing search technologies. For example, the technology described herein provides a solution that enables a search engine to provide bundle recommendations using a machine learning technique that accurately identifies compatible items, thereby enabling the search engine to provide bundles including a particular item being searched and items compatible with the item being searched, the particular item and compatible items matching a user's intent.

In particular, some aspects are directed to a search engine capable of providing the bundle recommendation in response to determining that an item description, of an item listing of a particular item, has one or more compatible items. Based on determining the item description includes one or more compatible items, the search engine identifies identifiers for the compatible items within unstructured text of the item description. By determining that an item listing comprises compatible items and subsequently identifying the corresponding identifiers within a plurality of item listings identified as having compatible items (rather than identifying identifiers in a population of item listings with item listings that do not include compatible items), the technology disclosed herein provides a faster and computationally efficient method for selecting compatible items for bundle recommendations. Additionally, by identifying identifiers of the compatible products, the technology disclosed herein provides a faster and computationally efficient method compared to methods that identify related products based on terms in the item description (e.g., colors of the item in the item description and length measurements of the item in the item description) rather than identifying the identifiers of the compatible items in the unstructured text of item descriptions.

Further, because search engines are searching item listings for a large quantity of items (e.g., over one billion items), search systems that process the item listings for compatible products without exhausting computer resources are desirable. As such, the present technology disclosed herein uses a classification model to determine that unstructured text of the item description includes compatible items. Based on determining the item listing comprises compatible items listed in the unstructured text of the item description using the classification model, the search system then identifies identifiers within the item description that identify the compatible items. The identifiers are identified using natural language processing. The identifiers may include, for example, a model identifier. Based on at least one of the identifiers identified, the system selects an item listing for a first compatible item from an inventory of a listing platform. A bundle recommendation is then provided to a user device, the bundle recommendation comprising the item listing for the item and the item listing for the compatible item.

In accordance with some aspects, the technology described herein leverages prior user interaction data, user feedback, pricing, and shipment data to provide a personalized or popular bundle recommendation to the user prior. For instance, the compatible item for the bundle recommendation may be determined based on prior user interaction data associated with clicks, views, and purchases of other items and/or bundles comprising the compatible item. Items, for example, may be tangible (e.g., a deck of cards), intangible (e.g., software), or something that has a distinct and separate existence from other things (e.g., a subscription to an audible book collection for a period of time). Compatible items may include items configured to mechanically or electronically operate with a particular item being searched for by a user, such as a water filter for a particular refrigerator or sink.

In some configurations, multiple bundle recommendations are provided to the user. For example, bundle recommendations may be determined based on historical queries and purchases by a plurality of users or a plurality of similar users associated with bundles comprising particular compatible items. In some embodiments, item listings for items of a first category are identified based on one or more identifiers determined from a set of compatible items. Continuing the example, the item listings associated with the first category are ranked and the compatible items having the at least top two rankings are provided in two separate bundle recommendations. Further, a second plurality of item listings for items of a second category are also identified based on one or more identifiers determined from the set of compatible items. The item listings associated with the second category are ranked and the compatible items having the at least top two rankings are also provided in the two separate bundle recommendations. For example, the first bundle recommendation comprises the top ranked compatible item listing associated with the first category and the top ranked compatible item listing associated with the second category.

Aspects of the technology described herein provide a number of improvements over existing search technologies. For instance, computing resource consumption is improved relative to existing technologies. In particular, determining that unstructured text of an item description for the item listing includes compatible items prior to identifying identifiers for the compatible items provides a faster and computationally efficient method for selecting compatible items for bundle recommendations, since the system is identifying identifiers based on determining the item listing comprises compatible items, rather than processing a total population of item listings that includes item listings that do not have compatible items listed within the item description. As such, aspects of the present technology eliminate or at least reduce excessive processing power, network bandwidth, throughput, memory consumption, and so forth. Furthermore, aspects of the present technology eliminate or at least reduce the repetitive user queries and filter selections of existing search technologies because the bundle recommendations of the present technology comprise results that more closely correspond to a particular intent of the user.

Having briefly described an overview of aspects of the technology described herein, an exemplary operating environment in which aspects of the technology described herein may be implemented is described below.

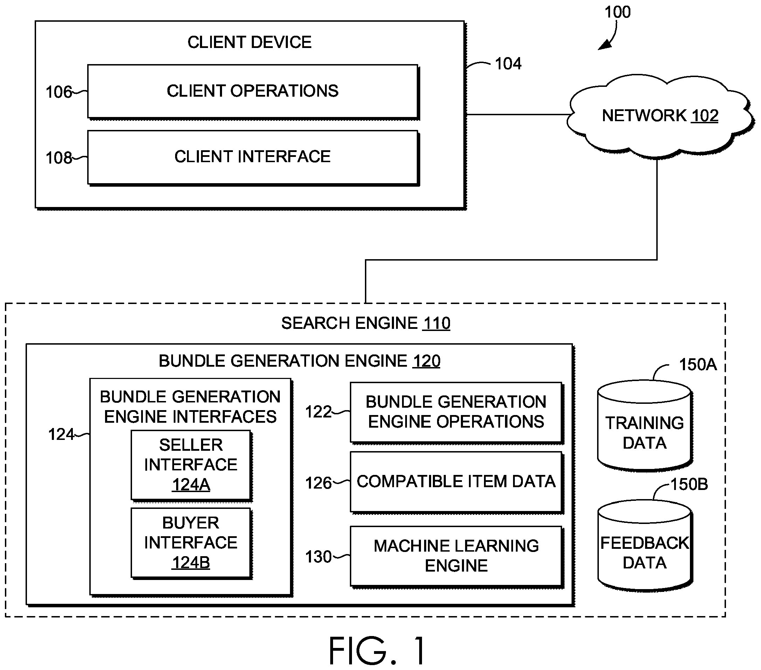

Turning now to FIG. 1, a block diagram is provided showing an operating environment 100 in which aspects of the present disclosure may be employed. It should be understood that this and other arrangements described herein are set forth only as examples. Other arrangements and elements (e.g., machines, interfaces, functions, orders, and groupings of functions) can be used in addition to or instead of those shown, and some elements may be omitted altogether for the sake of clarity. Further, many of the elements described herein are functional entities that may be implemented as discrete or distributed components or in conjunction with other components, and in any suitable combination and location. Various functions described herein as being performed by one or more entities may be carried out by hardware, firmware, and/or software. For instance, some functions may be carried out by a processor executing instructions stored in memory.

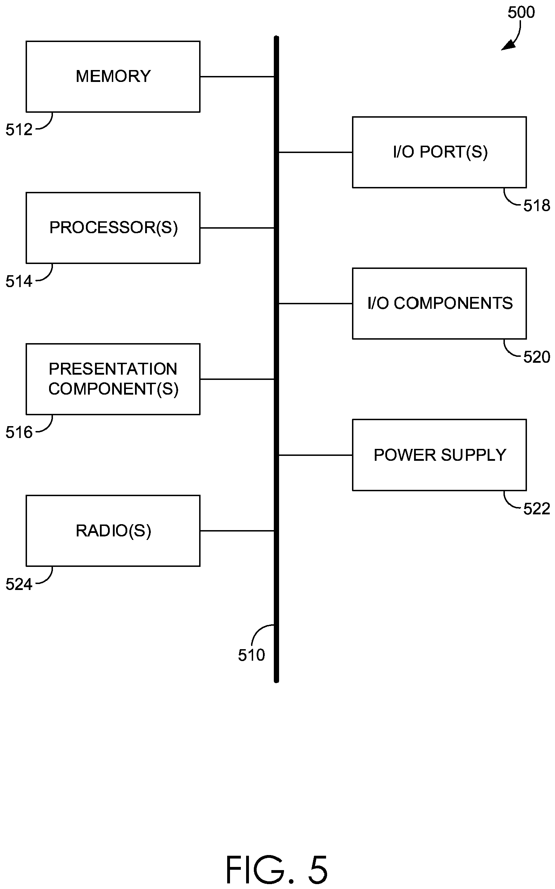

Among other components not shown, example operating environment 100 includes a network 102; a client device 104 having client operations 106 and a client interface 108; search engine 110 having bundle generation engine 120, training data 150A, and feedback data 150B. Bundle generation engine 120 comprises bundle generation engine operations 122, bundle generation engine interfaces 124 (including seller interface 124A and buyer interface 124B), compatible item data 126, and machine learning engine 130. It should be understood that environment 100 shown in FIG. 1 is an example of one suitable operating environment. Each of the components shown in FIG. 1 may be implemented via any type of computing device, such as computing device 500, described below in connection to FIG. 5, for example.

These components may communicate with each other via the network 102, which may include, without limitation, one or more local area networks (LANs) and/or wide area networks (WANs). In exemplary implementations, the network 102 comprises the Internet and/or a cellular network, amongst any of a variety of possible public and/or private networks. Network 102 may use protocols such as Hypertext Transfer Protocol (HTTP), HTTP Secure, Constrained Application Protocol, Message Queue Telemetry Transport, and so forth. In aspects, the network 102 may include multiple networks, as well as being a network of networks, but is shown in more simple form so as to not obscure other aspects of the present disclosure.

It should be understood that any number of user devices, servers, and data sources may be employed within the operating environment 100 within the scope of the present disclosure. Each may comprise a single device or multiple devices cooperating in a distributed environment. For instance, the search engine 110 may be provided via multiple devices arranged in a distributed environment that collectively provide the functionality described herein. Additionally, other components not shown may also be included within the distributed environment.

The client device 104 can be a computing device on the client-side of the operating environment 100, while the search engine 110 can be on the server-side of operating environment 100. For example, the search engine 110 can comprise server-side software designed to work in conjunction with client-side software on the client device 104 so as to implement any combination of the features and functionalities discussed in the present disclosure. This division of the operating environment 100 is provided to illustrate one example of a suitable environment, and there is no requirement for each implementation that any combination of the search engine 110 and the client device 104 remain as separate entities. While the operating environment 100 illustrates a configuration in a networked environment with a separate computing device, search engine, and historical queries, it should be understood that other configurations can be employed in which components are combined. For instance, in some configurations, a computing device may also serve as a data source and/or may provide search capabilities.

The client device 104 may comprise any type of computing device capable of use by a user. For example, in one aspect, the client device 104 may be the type of computing device 500 described in relation to FIG. 5 herein. By way of example and not limitation, a computing device may be embodied as a personal computer (PC), a laptop computer, a mobile or mobile device, a smartphone, a tablet computer, a smart watch, a wearable computer, a personal digital assistant (PDA), an MP3 player, global positioning system (GPS) or device, video player, handheld communications device, gaming device or system, entertainment system, vehicle computer system, embedded system controller, remote control, appliance, consumer electronic device, a workstation, or any combination of these delineated devices, or any other suitable device where search queries may be performed via the client operations 106 and the client interface 108, or where notifications can be presented via the client interface 108. Client operations 106 may be implemented via the bundle generation engine 120 and the client device 104 to communicatively provide the functionality described herein. A user may be associated with the client device 104. The user may communicate with the search engine 110 through one or more computing devices, such as the client device 104.

As shown in FIG. 1, the search engine 110 includes bundle generation engine 120, training data 150A, and feedback data 150B. Bundle generation engine 120 comprises bundle generation engine operations 122, bundle generation engine interfaces 124 (including seller interface 124A and buyer interface 124B), compatible item data 126, and machine learning engine 130.

In some configurations, the search engine 110 is embodied on one or more servers. In other configurations, the search engine 110 may be implemented at least partially or entirely on a user device, such as client device 104 or computing device 500 described in FIG. 5. The search engine 110 (and its components) may be embodied as a set of compiled computer instructions or functions, program modules, computer software services, or an arrangement of processes carried out on one or more computer systems.

In one aspect, the functions performed by modules of the search engine 110 (e.g., bundle generation engine 120) are associated with one or more personal assistant applications, services, or routines. In particular, such applications, services, or routines may operate on one or more user devices (such as client device 104) or servers (e.g., the search engine 110), or may be distributed across one or more user devices and servers. In some aspects, the applications, services, or routines may be implemented in the cloud. Moreover, in some aspects, these modules of the search engine 110 may be distributed across a network (e.g., network 102), including one or more servers and client devices (such as client device 104), in the cloud, or may reside on one or more user devices.

In addition, the modules of the search engine 110 (e.g., bundle generation engine 120) and the functions and services performed by these modules may be implemented at appropriate abstraction layer(s) such as an operating system layer, an application layer, or a hardware layer, etc. Alternatively, or in addition, the functionality of these modules (or the aspects of the technology described herein) can be performed, at least in part, by one or more hardware logic components. For instance, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), etc. Further, although functionality is described herein with regards to specific modules shown in search engine 110, it is contemplated that in some aspects, functionality of one of the modules can be shared or distributed across other modules.

At a high level, the search engine 110 receives an item listing for an item at a listing platform (e.g., via the bundle generation engine operations 122). Examples of listing platforms include e-commerce platforms, wherein listed products or services are available for purchase by a user of a client device upon navigation to the platforms. Other examples of listing platforms include rental platforms listing various items for rent (e.g., equipment, tools, real estate, vehicles, contract employees) and media platforms listing digital content items (e.g., content for download). The functionality of a listing platform includes provision of interfaces enabling surfacing of item listings for items to users of the listing platform.

In aspects, the item listing is received, via the bundle generation engine operations 122, based on the user providing a term or a portion of a search query. For example, if a user types in "baseball" or "baseball bat," the listing platform receives at least one item listing for a baseball item or a baseball bat item. The listing platform may receive the item listing from a remote or local database. In aspects, listing platform receives the item listing from a database specifically for item listing systems, such as EBAY content system, developed by EBAY INC., of San Jose, California. In aspects, the database comprises one or more database servers that facilitate access to one or more information storage repositories or databases. The database may comprise one or more inventories of items for sale.

The item listing (e.g., a description relating to the item comprising one or more of a price in a currency, reviews, shipment options, a rating, a condition of the item, a size of the item, a color of the item, etc.) received by the listing platform is associated with an item (e.g., an item for sale by a seller via an e-commerce computing-environment associated with an application or website). In aspects, the item is associated with one or more categories including meta-categories and leaf categories. For example, the meta-categories are each divisible into subcategories (or branch categories), whereas leaf categories are not divisible. In one non-limiting example, meta-categories may include, from broadest meta-category to the narrowest meta-category, "collectibles," "cards," and "baseball cards"; and a leaf category for the "baseball cards" meta-category may include baseball cards for a particular player during a particular year.

The bundle generation engine operations 122 also include determining that unstructured text of an item description for an item listing includes one or more compatible items. For example, the item description may include a description for a television item, the item description comprising a price, a saving value, a day of delivery to a location, a size of the television, design information (e.g., stand color, front color, stand type), video quality information (e.g., a resolution, motion rate, picture engine, etc.) audio information (e.g., sound output, speaker type, etc.), or other features and capabilities. The item description may also include compatible item data 126.

For example, the compatible item data 126 within the item description for a particular television item may include information identifying speakers or a hardware digital media player that are compatible with the particular television. The compatible item data 126 for the speakers or the hardware digital media player may include input and output information, such as visual or audio interface data (e.g., communication channels, cables, connectors). In some aspects, the compatible item data 126 for the speakers or the hardware digital media player includes a wireless networking standard or an antenna type. As another example, the item description may include data for an item compatible with a particular projector video home theater cinema item, such as compatible operating systems (e.g., Windows, iOS/Mac, Android). In some embodiments, the compatible item data 126 including the compatible operating systems are used by the search engine 110 to identify one or more compatible items.

Compatible item data 126 included in an item description of an item listing for an item may comprise identifiers for compatible items. For example, an identifier may include one or more keywords, such as "compatible," "compatible model," "compatible device," or "compatible brand." In some aspects, the identifier is a model identifier comprising an alphanumeric code distinguishing one model from other models. In some aspects, the identifier is computer-readable code distinguishing one model from other models. The identifier may also include a code or a description distinguishing one brand of a compatible item from other brands of items that may or may not be compatible. In an embodiment, one or more identifiers for a compatible item are unique to a seller. In aspects, the one or more identifiers designate a position within the item description of an alphanumeric code for a compatible model. In aspects, the item listing of the compatible item also includes an identifier of the item (e.g., the item description of the speakers includes an identifier for the television).

Machine learning engine 130 may comprise one or more classification models for determining that unstructured text of an item description includes compatible items. A classification model may be a standalone device, part of a server, or part of a cluster of servers. The classification model may comprise a neural network, such as a deep neural network for example. The classification model may perform a gradient boosted tree technique or a random forest technique in some embodiments. Further, the classification model of machine learning engine 130 may extract compatible item data 126 from unstructured text of item descriptions of item listings for particular items. The classification model may extract the compatible item data 126 from the unstructured text based on an identifier at an identified position within the item description. An output of the classification model may comprise a confidence score associated with the output.

The classification model of machine learning engine 130 may be trained by providing training data 150A as input for extraction of the compatible item data 126. The classification model may be trained and generated offline, loaded onto the search engine 110, and periodically updated using feedback data 150B. The classification model can extract sequences of characters, symbols, numbers, and alphanumericals. The classification model may implement supervised, semi-supervised, unsupervised training techniques, or a combination thereof. In aspects, the classification model is trained using training data 150A. For example, the training data 150A may comprise one or more keywords (e.g., "compatible"). In aspects, the training data 150A includes labeled sequences of characters, symbols, numbers, and alphanumericals, wherein the labels include a particular seller, category (e.g., meta-category or leaf category), item, item material, or combination thereof. In aspects, the sequence of characters, symbols, numbers, and alphanumericals may correspond a model identifier used by a particular seller.

For example, the training data 150A used for training the classifier may include a plurality of model identifiers from a plurality of various sellers for a particular category associated with compatible items. For instance, compatible items for a leaf category (e.g., U.S. half dollar, silver, Liberty Walking (1916-47)), such as coin holders or coin displays, may have identifiers unique to each seller, wherein a first plurality of characters of the model identifier for each particular seller is indicative of a particular material used for holding or displaying the coins. To illustrate, identifiers for a particular seller having "ARP" within the model identifier for a coin holder may indicate that the coin holder comprises an archival polyester material. As such, the classification model may be trained to classify compatible items by seller and material.

The bundle generation engine operations 122 also include identifying identifiers for one or more compatible items included within the unstructured text of the item description of the item listing for the item based on determining the unstructured text of the item description includes the compatible items. For example, based on identifying a keyword "compatible" within the unstructured text of the item description via the classification model, the bundle generation engine 120 can identify a model identifier comprising a sequence of characters, symbols, numbers, or alphanumericals within the unstructured text. As another example, based on identifying a keyword "compatible" within the unstructured text of the item description via the classification model, the bundle generation engine 120 can identify a location of a brand identifier within the unstructured text. The compatible item identifier may be identified using one or more natural language processing models of the machine learning engine 130.

A natural language processing model of the machine learning engine 130 processes the unstructured text of the item description for identifying a seller, a brand, a model, a version of an item, a category (e.g., meta-category or leaf category) for an item, or a combination thereof. Additionally, natural language processing model may perform entity recognition for identifying a type of seller (e.g., an individual seller or a particular company), relationships between entities (e.g., related companies), relationships between items and compatible items (e.g., compatible items related based on a power level input and output), or a combination thereof. In aspects, the entity recognition natural language processing model may identify compatible items based on quantity, price, shipment data (e.g., estimated date of arrival and price of shipping), origin of manufacture, or a combination thereof. For example, the natural language processing model may identify a compatible item from a plurality of determined compatible items based on the compatible item having a faster estimated date of arrival and an origin of manufacture having a higher quality rating compared to the other compatible items having either a later estimated date of arrival or an origin of manufacture with a lower quality rating.

The natural language processing model can identify one or more categories for each compatible item determined within the unstructured text or for a subset of the compatible items determined within the unstructured text. For example, the natural language processing model can identify an item listing for items of each of the compatible items of a particular category. For instance, if the compatible items determined for a printer item include color ink cartridges, the natural language processing model can identify a subset of the color ink cartridges having a particular color scheme category or color quality category (e.g., a professional photo category) based on identifiers. In some aspects, the natural language processing model identifies the compatible item listings of the compatible items and processes the compatible item descriptions of the compatible item listings to identify the particular category. As such, the natural language processing model identifies the subset of the compatible items having the particular category.

In some aspects, the subset of compatible items of the particular category are ranked. For example, if the compatible items include water filters for a water ionizer, the water filters may be ranked by brand, filtration method, contaminant removal, capacity, color, other item features, or a combination thereof. For instance, a water filter for the water ionizer having a higher capacity (e.g., 6,000 gal) may be ranked higher than another water filter with a lower capacity. As another example, a water filter with replaceable filter cartridges may be ranked higher than another water filter with non-removable filter cartridges. As another example, a water filter having a black color may be ranked higher than a water filter having a different color based on prior user purchases or views of related black items. In some aspects, a particular material of the water filter or the particular filtration methods may be ranked based on feedback data 150B comprising customer ratings. As such, the bundle generation engine operations 122 further include selecting a compatible item having the highest ranking or selecting a compatible item listing having the highest ranking.

In some aspects, the identifier for a compatible item is identified using a pre-trained fine-tuning approach, such as a generative pre-trained transformer (e.g., GPT-3), of the machine learning engine 130. For example, the generative pre-trained transformer may be trained via labeled training data 150A (e.g., identifiers labeled based on model or brand). In aspects, the generative pre-trained transformer identifies compatible item identifiers and categories associated with each compatible item of the compatible item identifiers. For example, the generative pre-trained transformer identifies compatible items comprising power supply adapter cords for a particular laptop or other mobile device. Continuing the example, the generative pre-trained transformer further identifies a first subset of the power supply adapter cords having a first category of a first length and a second subset of the power supply adapter cords having a second category of a second length, and so forth. In aspects, the bundle generation engine operations 122 further comprise ranking the compatible items of the first subset and ranking the compatible items of the second subset. For example, the compatible items may be ranked based on a brand and feedback data 150B comprising customer ratings. The highest ranked compatible item of each subset may be selected. In some aspects, a plurality of the highest ranked compatible items within each subset are selected.

Based on identifying the identifiers for the compatible items within the item descriptions, the bundle generation engine operations 122 further comprise selecting an item listing from an inventory of the listing platform, the item listing selected for a first compatible item based on a first identifier. In aspects, the item listing is selected based on the rankings, as discussed above. In some aspects, the item listing is selected based on the first identifier being associated with a higher number of user interactions than the other identifiers. For example, the first compatible item may have a higher number of purchases than the other compatible items. In some aspects, the item listing is selected based on the first identifier being associated with a higher rating (e.g., ratings from purchasers) than the other compatible items. In some aspects, the item listing is selected based on the first compatible item having an estimated delivery date sooner than the other compatible items. In aspects, the item listing is selected based on ranking each of the compatible item listings using user interaction data, shipment data, price, or a combination thereof.

Based on selecting the item listing, a bundle recommendation-comprising the item listing for the item and the item listing for the first compatible item-is provided to a user device, such as client device 104 for example. In some aspects, one or more bundle recommendations are provided to a user via the client interface 108. The bundle generation engine interfaces 124 are configured to provide the bundle recommendation(s) to client interface 108 and other client interfaces. In aspects, bundle generation engine interfaces 124 are configured to communicate the bundle recommendation(s) to other modules of search engine 110, such as the training data 150A for example. The bundle generation engine interfaces 124 may also be configured to communicate the one or more bundle recommendations and the associated user interactions with the bundle recommendation(s) to feedback data 150B for storage or to another database.

The bundle generation engine interfaces 124 comprise the seller interface 124A and the buyer interface 124B. The seller interface 124A and the buyer interface 124B support generating and communicating bundle recommendations. The bundle generation engine interfaces 124 have interface elements that support the search engine 110 in receiving and storing data for training data 150A and feedback data 150B associated with bundle recommendations. The bundle generation engine interfaces 124 are implemented via the bundle generation engine 120 and one or more client devices 104 associated with a buyer and a seller to communicatively provide the functionality described herein. The seller interface 124A may include instructions for generating interface elements to receive item listings used to generate a bundle recommendation, and the buyer interface 124B may include instructions for generating interface elements to receive user interaction data or feedback data 150B (also comprising user interaction data) that is used for training the machine learning engine 130 and for performing operations of the bundle generation engine operations 122. The bundle generation engine interfaces 124 can provide bundle recommendations via the seller interface 124A or the buyer interface 124B.

For example, the seller interface 124A may provide item listings comprising item descriptions and item images, as well as user ratings associated with each item. The seller interface 124A may also provide user interaction data associated with each item, such as purchasing information and associated time stamps, a number of views or clicks, one or more prices associated with the purchases, one or more price changes associated with an item and a corresponding time stamp, other user interaction data, or a combination thereof to support the generation of one or more bundle recommendations. The bundle generation engine interfaces 124 can support receiving feedback data 150B associated with one or more bundle recommendations, such as bundle purchasing information and associated time stamps, a number of views or clicks of a bundle, one or more prices associated with the purchases of the bundle, one or more price changes associated with the bundle and a corresponding time stamp, other user interaction data with the bundle, or a combination thereof to support the generation of one or more bundle recommendations. The bundle generation engine interfaces 124 can also support receiving feedback data 150B associated with one or more items within each bundle recommendation. Other variations and combinations of user interface elements associated predicted item conditions are contemplated with embodiment of this disclosure.

The training data 150A and the feedback data 150B, in some embodiments, may be embodied on a single database or a plurality of databases, wherein one or more of the databases comprise one or more hardware components that are part of the search engine 110. In some embodiments, the training data 150A and the feedback data 150B are embodied within the bundle generation engine 120. The training data 150A and the feedback data 150B may be one or more discrete components separate from search engine 110 or may be incorporated or integrated into the search engine 110 or other components of the operating environment 100. In aspects, the one or more of the databases are configured for storing information regarding item listings and prior user interaction data from a plurality of users, including, for instance, purchases of one or more bundles or purchases of an item of the one or more bundles by a plurality of users via client interface components (e.g., client interface 108).

For example, the training data 150A and the feedback data 150B may store user interactions with the one or more bundles or an item of the one or more bundles, such as hovers, clicks, purchases, feedback provided, view times, returns, reasons for returns, refinement options selected for a particular search query, other user interactions, or a combination thereof. In some embodiments, the training data 150A and the feedback data 150B store a timestamp (e.g., day, hour, minute, second, etc.) for each user interaction. As another example, the training data 150A and the feedback data 150B may store labeled item listings, the item listings labeled based on item quality, condition, ranking, material, brand, manufacturer, or a combination thereof. In aspects, the training data 150A and the feedback data 150B may be labeled based on negative or positive feedback provided by purchasers.

The data stored in the training data 150A and the feedback data 150B can be used by the search engine 110 for generating one or more bundle recommendations. Feedback data 150B stored after a user purchases one or more bundle recommendations may be used to improve future or additional bundle recommendations. Further, the training data 150A and the feedback data 150B may comprise data sources or data systems, which are configured to make data available to any of the various constituents of operating environment 100. The search engine 110 can be configured to run any number of queries on the training data 150A or the feedback data 150B. Among other things, the databases can store identifier data of compatible items, which can be indexed.

Indexes stored in or associated with the training data 150A or the feedback data 150B can take the form of an inverted index, but other forms are possible. The one or more indexes may include sequences of characters, symbols, numbers, or alphanumericals associated with an identifier for a compatible item. The indexes may also include portions of the sequences, the portions associated with a version of a model, a brand, or a manufacturer. According to an example embodiment, the one or more indexes include named fields that enable access to one or more categories of the identifiers for the compatible items. For example, an inverted index of the one or more indexes may include a mapping from a particular identifier, sequence, or portion of the sequence to a seller, a manufacturer, a brand, a model, a version of the model, or a rating. In this way, a compatible item associated with a particular category may be mapped to a version of a model. In some embodiments, compatible items of a category may be identified by the named fields for further selection of a particular compatible item for a bundle recommendation.

In one embodiment, training data 150A may include one or more tables of hierarchical categories of compatible items associated with meta-categories and leaf categories. For example, the one or more tables may include an identifier field containing a unique category identifier and a name field for a relevant category. To illustrate, the identifier field for "Ford Ranger light bulbs" may be 9000 and the identifier field for "Ford Ranger fog light" may be 9161. Furthermore, the name field may be indexed based on a number of purchases, a rating, or a number of views associated with a compatible item listing. In embodiments, the name field is indexed based on a number of views compared to the number of purchases. In some embodiments, the named field is indexed based on item bids, item subscriptions, online shares, and so forth.

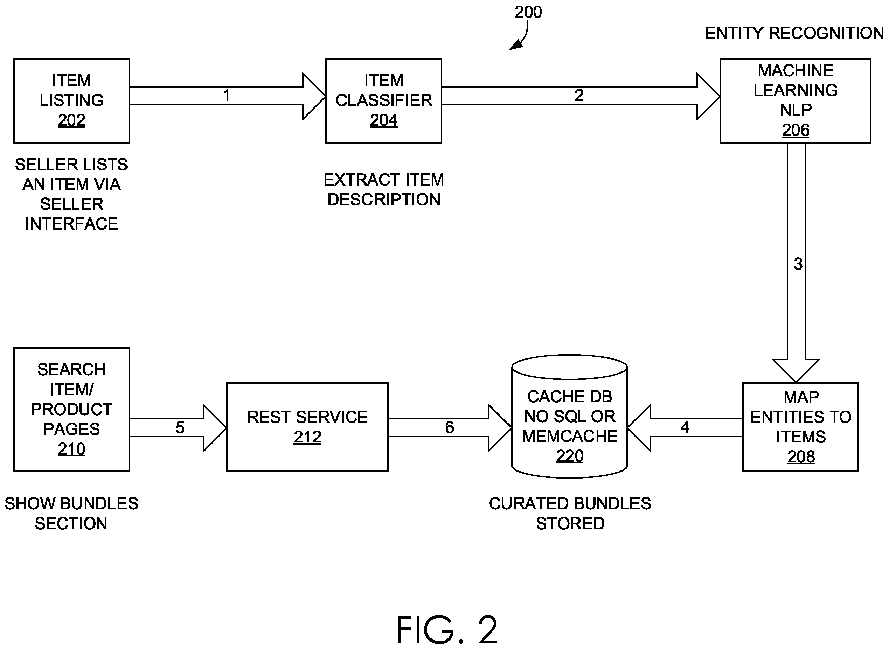

FIG. 2 illustrates an example flow diagram 200 for generating a bundle recommendation. At 202, an item listing is received. In aspects, the item listing is received from a seller via a seller interface (e.g., seller interface 124A in FIG. 1). The item listing is for a tangible or intangible item (e.g., anti-malware software) and comprises an item description. The item description (e.g., price, brand and model name, seller information, style, color(s), and so forth) contains one or more identifiers that identify a compatible item. An identifier may comprise a model identifier or a brand identifier. In aspects, the identifier comprises a sequence of symbols, alphanumerics, numbers, characters, machine-readable data, a machine-readable image, other types of identifiers, or a combination thereof. In aspects, a portion of the identifier identifies a seller or manufacturer. In one example embodiment, the item description may be for a lamp and the identifiers listed in the item description may identify compatible light bulbs and lampshades.

At 204, an item classifier extracts the one or more identifiers within the item description. For example, the item classifier may include executable and operational functions and data structures defining an algorithm, such as a supervised or unsupervised learning algorithm. The item classifier may extract the one or more identifiers from the item description based on one or more keywords (e.g., "compatible") or a particular portion of the sequence of symbols, alphanumerics, numbers, characters, machine-readable data, or machine-readable image. In aspects, the item classifier is trained to extract identifiers using training data (e.g., training data 150A) having model identifiers for items offered by a particular seller. In some aspects, the item classifier is trained using item listings that each have a standard identification number provided by the listing platform.

At 206, machine learning natural language processing is used for identifying compatible item listings based on the identifiers extracted. For example, one or more machine learned models (e.g., machine learning engine 130) can identify a compatible item listing using an identifier and can also extract a named entity from unstructured text of the compatible item listing. The named entity may comprise a company identifier or a manufacturer identifier. In some aspects, an entity recognition natural language processing model may extract compatible item features from the compatible item listing. For example, compatible item features for a video doorbell item (a compatible item with items comprising a particular LED light, door, or power cord, for example) may include audio information, size, resolution, weight, power information, color, and other technical or descriptive features.

At 208, the extracted entities are mapped to items (e.g., via Apache Airflow). For example, a company identifier or a manufacturer identifier extracted from the unstructured text of the compatible item listing may be mapped to a plurality of compatible items. For instance, the video doorbell item that is compatible with the particular LED light, door, or power cord may also be compatible with a particular battery sold or manufactured by one or more companies or manufacturers associated with the extracted company identifier or manufacturer identifier. The mapping of the extracted entities to the items may be based on an index of item and compatible item pairs. In embodiments, each pair in the index may be associated with a standard identification number provided by a server of the listing platform. The index may comprise named fields associated with a category for each of the pairs of the item and compatible item. In some aspects, the index is ordered by the named field and based on user interaction data, such as a number of purchases. To illustrate, the index may be ordered based on a brand name of the compatible item within the pair, the order of each brand name ascending from a highest ranked brand to a lowest ranked brand, and the order of each brand name pair ascending from a highest number of purchases of the compatible item to the lowest number of purchases of the compatible item.

At 220, the compatible items mapped to the entities identified by the natural language processing model are stored in a database. In aspects, a memory cache server is deployed in conjunction with the database for storing the compatible items and corresponding data associated with identified entities. In aspects, the memory cache is an open source memory cache application (e.g., memcached). In some aspects, the database is a non-relational database (e.g., a NoSQL database). In some embodiments, multiple servers comprising a NoSQL cluster distribute the workload associated with the search engine (e.g., search engine 110 in FIG. 1). Additionally, one or more bundle recommendations, generated from the mapping of the compatible items to the identified entities, are stored in the database.

At 210, the search engine processes pages of products and item listings for each product associated with each item in the one or more bundle recommendations. For example, the search engine may identify a plurality of bundle recommendations having a number of purchases above a threshold. Using the identified bundle recommendations having the number of purchases above the threshold, the search engine processes pages of products having the compatible items of each bundle recommendation and item listings for each of those compatible items. A rest service may be applied to the item listings for those compatible items having the number of purchases above the threshold at 212. For example, a rating associated with each compatible item may be received, and the rating may be used for generating additional or future bundle recommendations for storage at the database at 220. As another example, a rating associated with bundle recommendation as a whole may be received, and the rating may be used for generating additional or future bundle recommendations for storage at the database at 220.

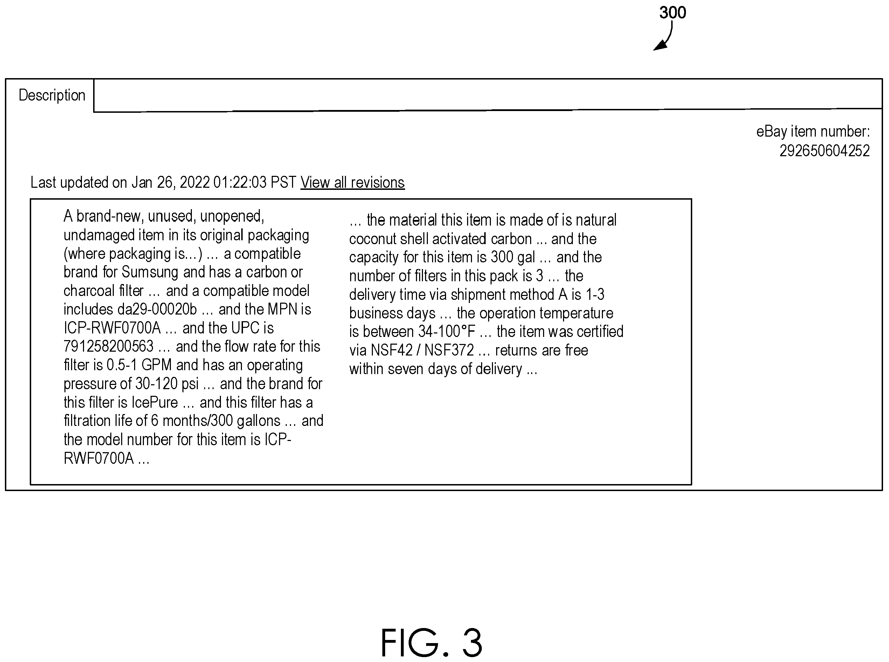

FIG. 3 depicts an example item description 300 of an item listing, the item description comprising one or more identifiers for compatible items within unstructured text of the item description. Example item description 300 comprises a standard identification number provided by the listing platform (e.g., eBay item number 292650604252). Example item description 300 also comprises a condition (brand new), a model number (ICP-RWF0700A), a capacity (300 gal), shipment data comprising a delivery time (1-3 business days via shipment method A), and so forth. In addition, the example item description 300 includes keywords "compatible brand" and "compatible model," which identify a position of a location within the item description 300 of the brand identifier and model identifier for items compatible with the item number 292650604252. Example compatible model identifier in example item description 300 has the following sequence: da29-00020b.

Compatible items offered for sale by one or more sellers on the listing platform may be identified using the da29-00020b identifier. For example, this identifier may be listed within unstructured data of the item listing of the compatible items offered for sale on the listing platform. A classification model may determine various item listings within the listing platform having particular identifiers (e.g., model identifiers corresponding to a particular brand). Based on the determinations of the classification model, a natural language processing model may identify the da29-00020b identifier within one or more item listings. In one example embodiment, a bundle recommendation is provided based on the one or more item listings having the da29-00020b identifier. The bundle recommendation may include both the item associated with item number 292650604252 and the compatible item having the item listing with the da29-00020b identifier.

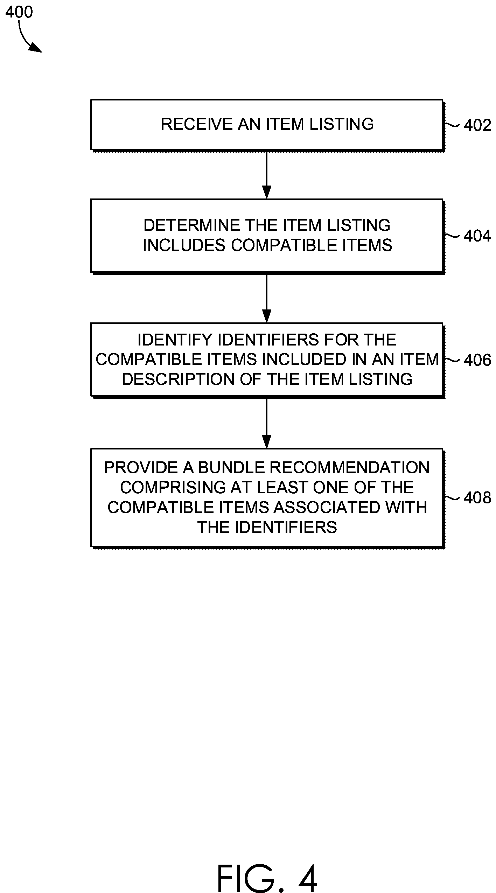

FIG. 4 depicts example flow diagram 400 for generating a bundle recommendation. At 402, an item listing is received from one or more sellers via an item listing platform. The item listing may include an item description comprising one or more of images, unstructured text, and structured text. The item listing may be for an item that is tangible or intangible.

At 404, item listings having compatible items are determined. For example, a classification model may be used to determine that unstructured text of the item description for the item listing includes one or more compatible items. In some aspects, the classification model can identify the one or more compatible items based on one or more particular categories associated with the one or more compatible items (e.g., the item listing is for a watch item, and the particular category includes watch bands or white leather watch bands that are compatible for the watch item).

At 406, based on determining the unstructured text of the item description includes the one or more compatible items, one or more identifiers for compatible items are identified within the unstructured text of the item description. In some aspects, a natural language processing model identifies the one or more identifiers. In some aspects, one or more entity recognition natural language processing models identify the one or more identifiers. In some aspects, a generative pre-trained transformer identifies the one or more identifiers. In some aspects, one of the one or more identifiers is a model identifier or a brand identifier. In some aspects, one of the one or more identifiers is a model and brand identifier.

In some aspects, a plurality of compatible item listings are extracted from an inventory of the listing platform based on the one or more identifiers identified. For example, if the item is a juicer and the item description for the juicer comprises an identifier for a blade, a plurality of item listings for compatible blades are extracted from the inventory. In some aspects, a subset of the plurality of compatible item listing are associated with a particular category, such as a leaf category. For example, the plurality of compatible item listings may be for blades, and the subset may be for blades that are made solely of stainless steel.

In some embodiments, an item listing for a first compatible item identified based on a first identifier of the one or more identifiers is selected from an inventory of the listing platform. In some aspects, the first compatible item is determined for selection from a plurality of compatible items based on user interactions. For example, the user interactions may be user interactions made by a user who is searching for the item that has the item listing comprising the first identifier. In some aspects, the user interactions were made by other users who also searched the item that has the item listing comprising the first identifier. In some aspects, the user interactions were made by other users and those user interactions were with bundle recommendations each comprising at least one of the plurality of compatible items.

In one aspect, a first category is identified for a first subset of the compatible items. Further, a plurality of item listings for items of the first category are identified based on one or more identifiers determined for the first subset of the compatible items. A ranking for each item listing from the plurality of item listings is determined for the items of the first category, and the item listing for the first compatible item is selected from the plurality of item listings for the items of the first category based on the rankings.

Continuing the example, a second category is also identified for a second subset of the compatible items. Further, a second plurality of item listings for items of the second category are identified based on one or more identifiers determined for the second subset of the compatible items. A ranking is determined for each item listing from the second plurality of item listings for the items of the second category. As such, an item listing for a second compatible item is selected based on the ranking, wherein the bundle recommendation further comprises the item listing for the second compatible item.

In aspects, the ranking for each item listing from the plurality of item listings for the items of the first category are based on one or more of user interactions with each item listing, shipment data for each item listing, or price associated with each item listing. In some aspects, the ranking for each item listing from the plurality of item listings for the items of the second category are based on one or more of user interactions with each item listing, shipment data for each item listing, or price associated with each item listing. In some aspects, the one or more of user interactions are interactions by a user who is searching for the item having the item listing having the compatible item identifiers. In other aspects, the one or more of user interactions are interactions by other users who purchased the first compatible item or the second compatible item.

In some aspects, the first compatible item is selected based on mapping entities (e.g., one or more sellers) to a plurality of identifiers and identifying an entity based on the mapping of the entities to the identifiers. For example, entity recognition may be used for identifying a type of seller (e.g., an individual seller or a particular company) and relationships between entities (e.g., related companies). Continuing the example, identifiers are mapped to a type of seller or to groupings of sellers based on relationships between entities. Based on the mapping, particular compatible items associated with the identifiers may have higher purchaser reviews based on a particular entity. Continuing the example, the first compatible item may be selected based on an entity having a highest purchaser review.

At 408, the item listing for the first compatible item is provided in a bundle recommendation that also includes the item listing from which the first identifier was identified. For example, an item listing for the juicer may comprise the first identifier for a compatible blade, and the bundle recommendation may include the item listing for the juicer and the item listing for the blade. In some aspects, a bundle recommendation includes an image of the juicer and an image of the blade, for example. In some aspects, a bundle recommendation comprises a plurality of compatible item listings.

With reference to FIG. 5, computing device 500 includes a bus 510 that directly or indirectly couples the following devices: memory 512, one or more processors 514, one or more presentation components 516, one or more input/output (I/O) ports 518, one or more I/O components 520, and an illustrative power supply 522. Bus 510 represents what may be one or more busses (such as an address bus, data bus, or combination thereof). Although the various blocks of FIG. 5 are shown with lines for the sake of clarity, in reality, these blocks represent logical, not necessarily actual, components. For example, one may consider a presentation component such as a display device to be an I/O component. Also, processors have memory. The inventors hereof recognize that such is the nature of the art and reiterate that the diagram of FIG. 5 is merely illustrative of an exemplary computing device that can be used in connection with one or more aspects of the present technology. Distinction is not made between such categories as "workstation," "server," "laptop," "handheld device," etc., as all are contemplated within the scope of FIG. 5 and with reference to "computing device."

Computing device 500 typically includes a variety of computer-readable media. Computer-readable media can be any available media that can be accessed by computing device 500 and includes both volatile and nonvolatile media, removable and non-removable media. By way of example, and not limitation, computer-readable media may comprise computer-storage media and communication media.

Computer-storage media includes both volatile and nonvolatile, removable and non-removable media implemented in any method or technology for storage of information such as computer-readable instructions, data structures, program modules, or other data. Computer storage media includes, but is not limited to, RAM, ROM, EEPROM, flash memory or other memory technology, CD-ROM, digital versatile disks (DVDs) or other optical disk storage, magnetic cassettes, magnetic tape, magnetic disk storage or other magnetic storage devices, or any other medium which can be used to store the desired information and which can be accessed by computing device 500. Computer storage media does not comprise signals per se.

Communication media typically embodies computer-readable instructions, data structures, program modules, or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media, such as a wired network or direct-wired connection, and wireless media, such as acoustic, RF, infrared, and other wireless media. Combinations of any of the above should also be included within the scope of computer-readable media.

Memory 512 includes computer storage media in the form of volatile and/or nonvolatile memory. The memory may be removable, non-removable, or a combination thereof. Exemplary hardware devices include solid-state memory, hard drives, optical-disc drives, etc. Computing device 500 includes one or more processors 514 that read data from various entities such as memory 512 or I/O components 520. Presentation component(s) 516 presents data indications to a user or other device. Exemplary presentation components include a display device, speaker, printing component, vibrating component, and the like.

The I/O ports 518 allow computing device 500 to be logically coupled to other devices, including I/O components 520, some of which may be built in. Illustrative components include a microphone, joystick, game pad, satellite dish, scanner, printer, wireless device, etc.

The I/O components 520 may provide a natural user interface (NUI) that processes air gestures, voice, or other physiological inputs generated by a user. In some instances, inputs may be transmitted to an appropriate network element for further processing. An NUI may implement any combination of speech recognition, touch and stylus recognition, facial recognition, biometric recognition, gesture recognition both on screen and adjacent to the screen, air gestures, head and eye tracking, and touch recognition associated with displays on the computing device 500. The computing device 500 may be equipped with depth cameras, such as stereoscopic camera systems, infrared camera systems, RGB camera systems, and combinations of these, for gesture detection and recognition. Additionally, the computing device 500 may be equipped with accelerometers or gyroscopes that enable detection of motion. The output of the accelerometers or gyroscopes may be provided to the display of the computing device 500 to render immersive augmented reality or virtual reality.

Some aspects of computing device 500 may include one or more radio(s) 524 (or similar wireless communication components). The radio 524 transmits and receives radio or wireless communications. The computing device 500 may be a wireless terminal adapted to receive communications and media over various wireless networks. Computing device 500 may communicate via wireless protocols, such as code division multiple access ("CDMA"), global system for mobiles ("GSM"), or time division multiple access ("TDMA"), as well as others, to communicate with other devices. The radio communications may be a short-range connection, a long-range connection, or a combination of both a short-range and a long-range wireless telecommunications connection. When we refer to "short" and "long" types of connections, we do not mean to refer to the spatial relation between two devices. Instead, we are generally referring to short range and long range as different categories, or types, of connections (i.e., a primary connection and a secondary connection). A short-range connection may include, by way of example and not limitation, a Wi-Fi^{®} connection to a device (e.g., mobile hotspot) that provides access to a wireless communications network, such as a WLAN connection using the 802.11 protocol; a Bluetooth connection to another computing device is a second example of a short-range connection, or a near-field communication connection. A long-range connection may include a connection using, by way of example and not limitation, one or more of CDMA, GPRS, GSM, TDMA, and 802.16 protocols.

Further aspects, features and embodiments of the present disclosure will be described in the following clauses:
1. A computer-implemented method comprising:
   receiving an item listing for an item at a listing platform;
   determining, using a classification model, that unstructured text of an item description for the item listing includes compatible items;
   based on determining the unstructured text of the item description includes the compatible items, identifying, using a natural language processing model, identifiers for the compatible items included within the unstructured text of the item description of the item listing for the item;
   selecting, from an inventory of the listing platform, an item listing for a first compatible item identified based on a first identifier of the identifiers for the first compatible item determined from the unstructured text of the item description of the item listing for the item; and
   providing, to a user device, a bundle recommendation comprising the item listing for the item and the item listing for the first compatible item.
2. The computer-implemented method of clause 1, further comprising:
   prior to selecting the item listing for the first compatible item, extracting, from the inventory of the listing platform, a plurality of item listings for a plurality of compatible items based on the identifiers included within item descriptions of each of the plurality of compatible items, the plurality of compatible items extracted using one or more entity recognition natural language processing models; and
   selecting the item listing for the first compatible item of the plurality of compatible items.
3. The computer-implemented method of clause 2, further comprising:
   determining the first compatible item based on user interactions, by other users, with bundle recommendations that each comprise at least one of the plurality of item listings.
4. The computer-implemented method of clause 1, further comprising:
   identifying a first category for a first subset of the compatible items;
   identifying, from the inventory of the listing platform, a plurality of item listings for items of the first category based on one or more identifiers determined for the first subset of the compatible items;
   determining a ranking for each item listing from the plurality of item listings for the items of the first category; and
   wherein the item listing for the first compatible item is selected from the plurality of item listings for the items of the first category based on the rankings.
5. The computer-implemented method of clause 4, further comprising:
   identifying a second category for a second subset of the compatible items;
   identifying, from the inventory of the listing platform, a second plurality of item listings for items of the second category based on one or more identifiers determined for the second subset of the compatible items;
   determining a ranking for each item listing from the second plurality of item listings for the items of the second category;
   selecting an item listing for a second compatible item based on the ranking; and
   wherein the bundle recommendation further comprises the item listing for the second compatible item.
6. The computer-implemented method of clause 4, wherein the ranking for each item listing from the plurality of item listings for the items of the first category are based on one or more selected from the following: user interactions with each item listing, shipment data for each item listing, and price associated with each item listing.
7. The computer-implemented method of clause 1, further comprising:
   mapping entities to the identifiers for the compatible items;
   identifying an entity, from the mapping of the entities to the identifiers, for the first compatible item; and
   providing, to the user device, the bundle recommendation including the entity for the first compatible item.
8. One or more non-transitory computer storage media storing computer-readable instructions that when executed by a processor, cause the processor to perform operations, the operations comprising:
   receiving an item listing for an item at a listing platform, the item listing including an item description for the item;
   determining that unstructured text of the item description includes one or more compatible items;
   based on determining the unstructured text of the item description includes the one or more compatible items, identifying identifiers for the one or more compatible items included within the unstructured text of the item description;
   selecting, from an inventory of the listing platform, a first compatible item from the one or more compatible items based on a first identifier of the identifiers, the first identifier corresponding to the first compatible item; and
   providing, to a user device, a bundle recommendation comprising the first compatible item and the item.
9. The one or more non-transitory computer storage media of clause 8, wherein the identifiers are identified using a generative pre-trained transformer.
10. The one or more non-transitory computer storage media of clause 8, wherein the first compatible item is selected based on extracting the first identifier from a first item description within a first item listing of the first compatible item using entity recognition natural language processing.
11. The one or more non-transitory computer storage media of clause 8, further comprising:
   determining that the unstructured text of the item description includes a plurality of compatible items;
   identifying an identifier for each of the plurality of compatible items included within the unstructured text of the item description;
   identifying a compatible item listing for each of the plurality of compatible items;
   determining a ranking for each of the compatible item listings; and
   selecting the first compatible item for the bundle recommendation based on the ranking for each of the compatible item listings.
12. The one or more non-transitory computer storage media of clause 11, wherein each of the compatible item listings are ranked based on user feedback for each of the plurality of compatible items or shipment data for each of the plurality of compatible items.
13. The one or more non-transitory computer storage media of clause 8, wherein the first identifier is a model identifier.
14. The one or more non-transitory computer storage media of clause 8, wherein the first compatible item is selected based on extracting the first identifier from unstructured text within a first item listing of the first compatible item using entity recognition natural language processing.
15. A system comprising:
   at least one processor; and
   one or more computer storage media storing computer-readable instructions that when executed by the at least one processor, cause the at least one processor to perform operations comprising:
      receiving an item listing for an item at a listing platform, the item listing comprising an item description for the item;
      determining, using a classification model, that unstructured text of the item description includes one or more compatible items;
      based on determining the unstructured text includes the one or more compatible items, identifying, using one or more natural language processing models, at least one identifier for each of the one or more compatible items included within the unstructured text of the item description;
      selecting, from an inventory of the listing platform, a first compatible item identified based on a first identifier of the at least one identifier; and
      providing, to a user device, a bundle recommendation comprising the item and the first compatible item.
16. The system of clause 15, further comprising selecting the first compatible item identified based on identifying the first identifier from a first item description of a first item listing of the first compatible item, wherein the first identifier is identified from the first item description using the one or more natural language processing models.
17. The system of clause 16, wherein the bundle recommendation comprises the first item listing of the first compatible item.
18. The system of clause 15, wherein the at least one identifier comprises a model and brand identifier.
19. The system of clause 15, further comprising:
   determining that the unstructured text of the item description includes a plurality of compatible items;
   identifying a model identifier for each of the plurality of compatible items included within the unstructured text of the item description;
   identifying a compatible item listing for each of the plurality of compatible items;
   determining a ranking for each compatible item listing, the ranking based on prior bundle purchases comprising the corresponding compatible item of the plurality of compatible items; and
   selecting the first compatible item for the bundle recommendation based on the ranking for each of the compatible item listings.
20. The system of clause 19, wherein each ranking is further based on shipment data for each of the compatible item listings.

## Claims

1. A computer-implemented method comprising:
receiving an item listing for an item at a listing platform;
determining, using a classification model, that unstructured text of an item description for the item listing includes compatible items;
based on determining the unstructured text of the item description includes the compatible items, identifying, using a natural language processing model, identifiers for the compatible items included within the unstructured text of the item description of the item listing for the item;
selecting, from an inventory of the listing platform, an item listing for a first compatible item identified based on a first identifier of the identifiers for the first compatible item determined from the unstructured text of the item description of the item listing for the item; and
providing, to a user device, a bundle recommendation comprising the item listing for the item and the item listing for the first compatible item.

2. The computer-implemented method of claim 1, further comprising:
prior to selecting the item listing for the first compatible item, extracting, from the inventory of the listing platform, a plurality of item listings for a plurality of compatible items based on the identifiers included within item descriptions of each of the plurality of compatible items, the plurality of compatible items extracted using one or more entity recognition natural language processing models; and
selecting the item listing for the first compatible item of the plurality of compatible items.
wherein, optionally, the method further comprises:
determining the first compatible item based on user interactions, by other users, with bundle recommendations that each comprise at least one of the plurality of item listings.

3. The computer-implemented method of claim 1 or 2, further comprising:
identifying a first category for a first subset of the compatible items;
identifying, from the inventory of the listing platform, a plurality of item listings for items of the first category based on one or more identifiers determined for the first subset of the compatible items;
determining a ranking for each item listing from the plurality of item listings for the items of the first category; and
wherein the item listing for the first compatible item is selected from the plurality of item listings for the items of the first category based on the rankings;
wherein, optionally, the method further comprises:
identifying a second category for a second subset of the compatible items;
identifying, from the inventory of the listing platform, a second plurality of item listings for items of the second category based on one or more identifiers determined for the second subset of the compatible items;
determining a ranking for each item listing from the second plurality of item listings for the items of the second category;
selecting an item listing for a second compatible item based on the ranking; and
wherein the bundle recommendation further comprises the item listing for the second compatible item.

4. The computer-implemented method of claim 3, wherein the ranking for each item listing from the plurality of item listings for the items of the first category are based on one or more selected from the following: user interactions with each item listing, shipment data for each item listing, and price associated with each item listing.

5. The computer-implemented method of any one of the preceding claims, further comprising:
mapping entities to the identifiers for the compatible items;
identifying an entity, from the mapping of the entities to the identifiers, for the first compatible item; and
providing, to the user device, the bundle recommendation including the entity for the first compatible item.

6. One or more non-transitory computer storage media storing computer-readable instructions that when executed by a processor, cause the processor to perform operations, the operations comprising:
receiving an item listing for an item at a listing platform, the item listing including an item description for the item;
determining that unstructured text of the item description includes one or more compatible items;
based on determining the unstructured text of the item description includes the one or more compatible items, identifying identifiers for the one or more compatible items included within the unstructured text of the item description;
selecting, from an inventory of the listing platform, a first compatible item from the one or more compatible items based on a first identifier of the identifiers, the first identifier corresponding to the first compatible item; and
providing, to a user device, a bundle recommendation comprising the first compatible item and the item.

7. The one or more non-transitory computer storage media of claim 6, wherein the identifiers are identified using a generative pre-trained transformer; or, optionally,
wherein the first compatible item is selected based on extracting the first identifier from a first item description within a first item listing of the first compatible item using entity recognition natural language processing.

8. The one or more non-transitory computer storage media of claims 6 or 7, further comprising:
determining that the unstructured text of the item description includes a plurality of compatible items;
identifying an identifier for each of the plurality of compatible items included within the unstructured text of the item description;
identifying a compatible item listing for each of the plurality of compatible items;
determining a ranking for each of the compatible item listings; and
selecting the first compatible item for the bundle recommendation based on the ranking for each of the compatible item listings.

9. The one or more non-transitory computer storage media of claim 8, wherein each of the compatible item listings are ranked based on user feedback for each of the plurality of compatible items or shipment data for each of the plurality of compatible items.

10. The one or more non-transitory computer storage media of any one of claims 6 to 9, wherein the first identifier is a model identifier.

11. The one or more non-transitory computer storage media of any one of claims 6 to 10, wherein the first compatible item is selected based on extracting the first identifier from unstructured text within a first item listing of the first compatible item using entity recognition natural language processing.

12. A system comprising:
at least one processor; and
one or more computer storage media storing computer-readable instructions that when executed by the at least one processor, cause the at least one processor to perform operations comprising:
receiving an item listing for an item at a listing platform, the item listing comprising an item description for the item;
determining, using a classification model, that unstructured text of the item description includes one or more compatible items;
based on determining the unstructured text includes the one or more compatible items, identifying, using one or more natural language processing models, at least one identifier for each of the one or more compatible items included within the unstructured text of the item description;
selecting, from an inventory of the listing platform, a first compatible item identified based on a first identifier of the at least one identifier; and
providing, to a user device, a bundle recommendation comprising the item and the first compatible item.

13. The system of claim 12, further comprising selecting the first compatible item identified based on identifying the first identifier from a first item description of a first item listing of the first compatible item, wherein the first identifier is identified from the first item description using the one or more natural language processing models,
wherein, optionally, the bundle recommendation comprises the first item listing of the first compatible item.

14. The system of claim 12 or 13, wherein the at least one identifier comprises a model and brand identifier.

15. The system of any one of claims 12 to 14, further comprising:
determining that the unstructured text of the item description includes a plurality of compatible items;
identifying a model identifier for each of the plurality of compatible items included within the unstructured text of the item description;
identifying a compatible item listing for each of the plurality of compatible items;
determining a ranking for each compatible item listing, the ranking based on prior bundle purchases comprising the corresponding compatible item of the plurality of compatible items; and
selecting the first compatible item for the bundle recommendation based on the ranking for each of the compatible item listings;
wherein, optionally, each ranking is further based on shipment data for each of the compatible item listings.
